# EUROPEAN PATENT SPECIFICATION

(11) **EP 2 402 203 B1**
(45) Date of publication and mention of the grant of the patent: **10.05.2023**
(21) Application number: 11171892.0
(22) Date of filing: 29.06.2011
(51) Int. Cl.: B60L 1/00

(54) **Electric automobile, hybrid automobile, automobile, automobile brake network system, in-vehicle network system, and electronic control network system**
Elektrisches Automobil, hybrides Automobil, Automobil, Automobilbremsnetzwerksystem, fahrzeuginternes Netzwerksystem und elektronisches Steuernetzwerksystem
Automobile électrique, automobile hybride, automobile, système de réseau de frein automobile, système de réseau embarqué et système de réseau de contrôle électronique

(30) Priority: 29.06.2010 JP 2010147904
(43) Date of publication of application: 04.01.2012
(73) Proprietor: Hitachi Astemo, Ltd., Hitachinaka-shi, Ibaraki 312-8503 (JP)
(72) Inventor: Ogura, Hidetoshi, Ibaraki 312-8503 (JP); Kurosawa, Kenichi, Ibaraki 312-0062 (JP)
(74) Representative: MERH-IP Matias Erny Reichl Hoffmann Patentanwälte PartG mbB

(56) References cited:
- WO-A1-2006/022125
- US-A1- 2010 073 043

## Description

### BACKGROUND OF THE INVENTION

### Field of the Invention

The present invention relates to an electronic control network system for an electric vehicle.

### Background Art

In recent years, from the point of view of environment and fuel efficiency, an electric automobile and a hybrid automobile have attracted attention. For performing advanced control, a large number of motors and ECUs (Electronic Control Units) are mounted on such automobiles. Examples of the ECUs mounted on such automobiles include: an inverter control ECU for controlling an inverter; a steering control ECU for controlling a steering inverter; a battery control ECU for controlling a battery; an air conditioner control ECU for controlling an air conditioner; and a power window control ECU for controlling a power window. The plurality of ECUs described above is connected to one another via an in-vehicle network in order to share information thereamong.

JP Patent Publication (Kokai) No. 2009-12613 A describes that a steering control ECU is configured to: receive vehicle speed information transmitted from another ECU via an in-vehicle network; determine whether or not the vehicle speed information is equal to or larger than a predetermined value (for example, 40 km/h); and perform control on steering in accordance with a vehicle speed, for example, determine that the car is in a non-dangerous state if the vehicle speed information is smaller than the predetermined value, and determine that the car is in a dangerous state of a vehicle running condition by analyzing a steering pattern if the vehicle speed information is equal to or larger than the predetermined value. In this way, the in-vehicle network is used to allow the ECUs to share information thereamong, to thereby perform safer control and optimal control.

Document US 2010/0073043 A1 discloses a data communication network that includes a first sub-network and a second sub-network. The first sub-network includes two or more two master clocks, and a synchro-nisation system connected to the master clocks. The synchronisation system determines a time-base for the master clocks and controls the master clocks based on the determined time-base. The first sub-network includes one or more slave synchronisation data sources for generating slave clock synchronisation data derived from time information of the master clocks. The second sub-network includes one or more slave clocks and a slave clock time-base controller connected to the slave synchronisation data source. The time-base controller receives the slave clock synchronisation data and controls one or more of the one or more slave clocks in accordance with the slave clock synchronisation data.

Document WO 2006/022125 A1 discloses an electric vehicle that is driven with output power of a motor, and includes: an accumulator unit that transmits electric power to and from the motor; an auxiliary machine that is actuated with a supply of electric power from the accumulator unit; a steering assist structure that is driven with a supply of electric power from the accumulator unit and outputs a steering torque to a steering mechanism; a voltage measurement module that measures a voltage of the accumulator unit; and a control module that, when the voltage measured by the voltage measurement module decreases to or below a preset first level, stops the supplies of electric power from the accumulator unit to the auxiliary machine and to the motor.

Incidentally, in FlexRay (see FlexRay Communications System Protocol Specification, Version 2.1 Revision A, FlexRay Consortium), which is used as an in-vehicle network and is a time synchronous communication type in-vehicle network, 2 to 3 ECUs (synchronization execution nodes) prepared in advance exchange communication frames including time synchronous information, to thereby establish synchronous communication among the ECUs.

The respective ECUs perform time synchronous communication in accordance with the established time synchronization.

The reason why the number of ECUs which establish synchronous communication is restricted to three or smaller is that, if time synchronization is performed among a large number of ECUs, a phenomenon may occur in which synchronization is established for a plurality of ECU groups and time is not synchronized among these groups. Such a phenomenon is referred to as a clique phenomenon. If the clique phenomenon occurs, communication between ECUs belonging to different groups becomes impossible.

### SUMMARY OF THE INVENTION

In the in-vehicle network using FlexRay, if an ECU which serves as the synchronization execution node breaks down, transmission of the communication frame (synchronization frame) including the time synchronous information becomes impossible. At this time, it becomes impossible for the respective ECUs to perform time synchronization, so that communication via the in-vehicle network stops.

If utilization of the in-vehicle network becomes impossible, information exchange among the ECUs accordingly becomes impossible. For example, because the steering control ECU according to JP Patent Publication (Kokai) No. 2009-12613 A receives the vehicle speed information from another ECU to thereby perform steering control, if communication with the another ECU via the in-vehicle network becomes impossible, in effect, the steering control ECU cannot perform the steering control. As a result, it becomes impossible to assist a driver by means of the steering control and allow an automobile to safely run. In this state, although the automobile itself can run, the safety is deteriorated.

The present invention has been made in order to solve the above-mentioned problem, and therefore has an object to prevent an automobile from keeping running in an unsafe state when communication via an in-vehicle network becomes impossible.

An electronic control network system according to the present invention is defined in independent claim 1.

In the electronic control network system for an electric vehicle according to the present invention, a synchronization execution node is selected from electronic control units which perform electronic control on the running or power of an automobile, among respective electronic control units.

In the electronic control network system for an electric vehicle according to the present invention, the synchronization execution node is the electronic control unit which performs the electronic control on the running or power of the automobile, and hence if the synchronization execution node breaks down, the automobile itself cannot run any more. This can avoid a state where the automobile keeps running with communication via the in-vehicle network being impossible, and hence such control that errs an the side of caution can be realized.

### BRIEF DESCRIPTION OF THE DRAWINGS

FIG. 1 is a configuration diagram of an electric automobile 1000 according to an example 1 useful for understanding the present invention.
FIG. 2 is a functional block diagram of a steering control ECU 10.
FIG. 3 is a functional block diagram of an inverter control ECU 30.
FIG. 4 is a functional block diagram of a battery control ECU 40.
FIG. 5 is a functional block diagram of an air conditioner control ECU 20.
FIG. 6 is a functional block diagram of a power window control ECU 140.
FIG. 7 is a flow chart showing processing in which a synchronization execution node establishes time synchronous communication.
FIG. 8 illustrates transmission timing of a communication frame when the steering control ECU 10 and the air conditioner control ECU 20 are the synchronization execution nodes.
FIG. 9 is a diagram illustrating a result obtained by classifying respective ECUs according to example 1.
FIG. 10 illustrates transmission timing of a communication frame when the steering control ECU 10 and the inverter control ECU 30 are the synchronization execution nodes.
FIG. 11 is a diagram illustrating a state where the steering control ECU 10 and the inverter control ECU 30 establish time synchronous communication.
FIG. 12 is a diagram illustrating a state where the battery control ECU 40 is classified into "ECUs which affect the running if they break down".
FIG. 13 is a configuration diagram of a hybrid automobile 2000 according to an example 2 useful for understanding the present invention.
FIG. 14 is a diagram illustrating a result obtained by classifying respective ECUs according to example 2.
FIG. 15 is a diagram illustrating a state where a steering control ECU 70, an inverter control ECU 100, an engine control ECU 80 establish time synchronous communication.
FIG. 16 is a configuration diagram of an automobile 3000 and a brake network system thereof according to example 4.
FIG. 17 is a table in which all combinations are listed with regard to behaviors when any two of three synchronization execution nodes break down.

### DETAILED DESCRIPTION OF THE PREFERRED EMBODIMENTS

### <Basic Overview of the Present Invention>

Hereinafter, first of all, the basic overview of the present invention is described. After that, embodiments of the present invention are described.

First, it is discussed to prevent a vehicle from keeping running in an unsafe state. An electric automobile is taken as an example of the vehicle. The electric automobile includes various ECUs mounted thereon, such as an inverter control ECU, a steering control ECU, and an air conditioner control ECU. Among these ECUs, the inverter control ECU is an ECU which controls an inverter which drives a motor for the running of the electric automobile, and hence if this ECU breaks down, the electric automobile cannot run any more. On the other hand, even if the air conditioner control ECU breaks down, the electric automobile itself can continue to run.

Here, it is assumed that the air conditioner control ECU is caused to behave as a synchronization execution node. It is assumed that the number of the synchronization execution nodes is two. At this time, if the air conditioner control ECU breaks down, as described above, utilization of the in-vehicle network becomes impossible, and hence an ECU which receives information from another ECU and uses the information for control cannot perform control any more. The above-mentioned steering control ECU can be regarded as such an example.

That is, in this case, in spite of the original premise that the electric automobile itself can continue to run even if the air conditioner control ECU breaks down, the electric automobile falls in an unsafe running condition.

In order to avoid such a trouble, it is preferable to prevent the electric automobile from keeping running in the state where time synchronization within the in-vehicle network cannot be established. In view of this, in the present invention, an ECU which performs control on the running or power of the automobile is selected as the synchronization execution node. In addition, in the present invention, an ECU which performs control not related to the control on the running or power of the automobile is not selected as the synchronization execution node.

Next, it is discussed to enable the automobile to keep safely running even if a given ECU breaks down. On the basis of an approach similar to the above, this can be achieved by avoiding selecting an ECU which performs control not related to the control on the running or power of the automobile as the synchronization execution node. In this case, even if the ECU which is not related to the control on the running or power of the automobile breaks down, the synchronization execution node can establish time synchronization, and hence the in-vehicle network can be utilized without any change. Accordingly, one ECU can continue to communicate with another ECU, to thereby perform control, and hence the vehicle is prevented from falling in an unsafe state.

Hereinabove, the basic overview of the present invention has been described. Hereinafter, specific embodiments are described for each vehicle type.

### <Example useful for understanding the present invention 1>

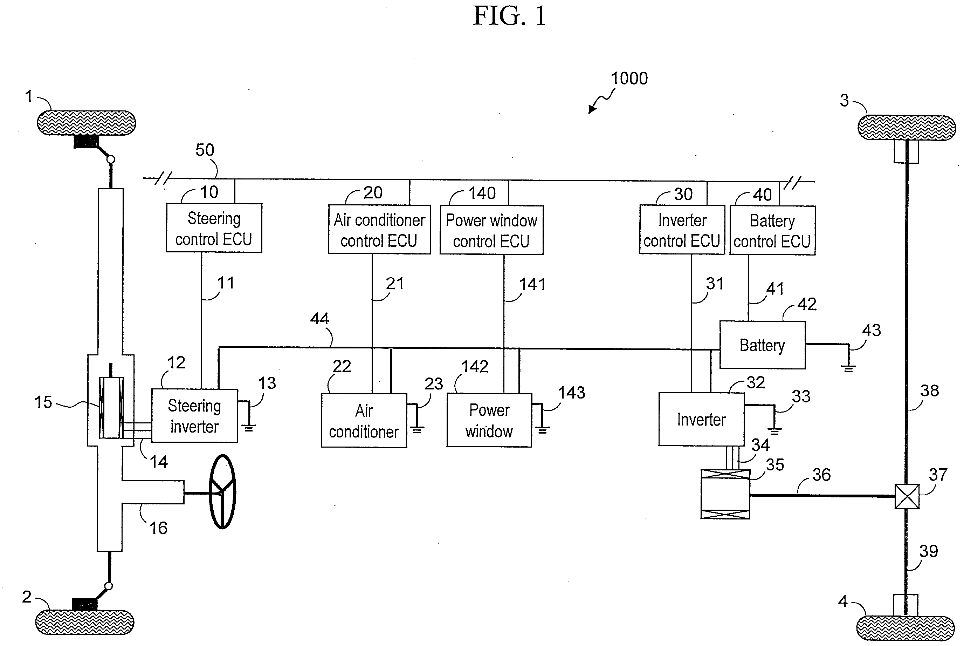

FIG. 1 is a configuration diagram of an electric automobile 1000 according to example 1 useful for understanding the present invention. The electric automobile 1000 includes front wheels 1 and 2, rear wheels 3 and 4, a steering device 16, an electric power-assisted motor 15, a steering inverter 12, abattery 42, an inverter 32, amotor 35, a propeller shaft 36, a rear differential 37, drive shafts 38 and 39, an air conditioner 22, and a power window 142.

The battery 42 includes a plurality of series-connected cells, and supplies a direct-current voltage to the steering inverter 12, the inverter 32, the air conditioner 22, and the power window 142 via a power supply line 44. A ground line 43 of the battery 42 is connected to the body of the electric automobile 1000. A battery control ECU 40 is connected to the battery 42 via a control line 41, and controls the state of the battery 42.

A steering control ECU 10 transmits a control command to the steering inverter 12 via a control line 11.

The steering inverter 12 converts the direct current from the battery 42 into an alternating current on the basis of the control command from the steering control ECU 10, and supplies the alternating current to the electric power-assisted motor 15 via a PWM line 14. The electric power-assisted motor 15 is built in the steering device 16. The steering device 16 is coupled to the front wheels 1 and 2. A ground line 13 of the steering inverter 12 is connected to the body of the electric automobile 1000.

An inverter control ECU 30 transmits a control command to the inverter 32 via a control line 31. The inverter 32 converts the direct-current voltage from the battery 42 into an alternating-current voltage, and supplies the alternating-current voltage to the motor 35 via a PWM line 34 on the basis of the control command from the inverter control ECU 30. A ground line 33 of the inverter 32 is connected to the body of the electric automobile 1000. The motor 35 is coupled to the propeller shaft 36, and power generated by the motor 35 is transmitted to the rear differential 37 via the propeller shaft 36. The power is further transmitted from the rear differential 37 to the rear wheels 3 and 4 via the drive shafts 38 and 39.

The air conditioner 22 receives a control command from an air conditioner control ECU 20 via a control line 21, and behaves on the basis of the control command. A ground line 23 of the air conditioner 22 is connected to the body of the electric automobile 1000.

The power window 142 receives a control command from a power window control ECU 140 via a control line 141, and behaves on the basis of the control command. A ground line 143 of the power window 142 is connected to the body of the electric automobile 1000.

An in-vehicle network 50 is connected to the steering control ECU 10, the inverter control ECU 30, the battery control ECU 40, the air conditioner control ECU 20, and the power window control ECU 140.

When the battery control ECU 40 detects a voltage drop of the battery 42, the inverter control ECU 30 and the air conditioner control ECU 20 can be notified to that effect via the in-vehicle network 50. When the inverter control ECU 30 receives the notification, the inverter control ECU 30 can cause the inverter 32 to behave in a low power consumption mode. In the same manner, the air conditioner control ECU 20 can bring the air conditioner 22 into a low power consumption mode. In the case where the battery control ECU 40 breaks down, detection of a voltage drop of the battery 42 merely becomes impossible, and the battery voltage itself can keep being supplied to the inverter 32.

When the steering control ECU 10 receives vehicle speed information from the inverter control ECU 30 via the in-vehicle network 50, the steering control ECU 10 gives to a driver a reaction force of steering according to the vehicle speed. This makes it possible to provide safe and driver-friendly handing.

As described above, the ECUs exchange control information according to the state of the electric automobile via the in-vehicle network 50, whereby safe and comfortable running control becomes possible.

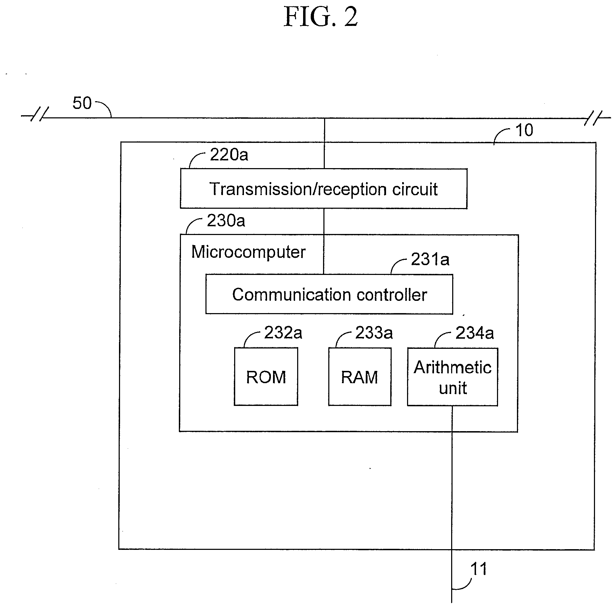

FIG. 2 is a functional block diagram of the steering control ECU 10. The steering control ECU 10 includes a microcomputer 230a and a transmission/reception circuit 220a. Further, the microcomputer 230a includes a ROM (Read Only Memory) 232a, a RAM (Random Access Memory) 233a, an arithmetic unit 234a, and a communication controller 231a. The ROM 232a stores therein a processing program. The RAM 233a temporarily stores therein data. The arithmetic unit 234a executes arithmetic processing. The communication controller 231a communicates with another ECU via the transmission/reception circuit 220a. The transmission/reception circuit 220a communicates with the another ECU via the in-vehicle network 50.

The microcomputer 230a included in the steering control ECU 10 can store the control information transmitted from the another ECU via the in-vehicle network 50, into the RAM 233a via the transmission/reception circuit 220a and the communication controller 231a. The communication controller 231a performs protocol processing of time synchronous communication. The arithmetic unit 234a executes the processing program stored in the ROM 232a, uses the control information stored in the RAM 233a to thereby perform control processing, and outputs a control command value for the steering inverter 12 to the control line 11.

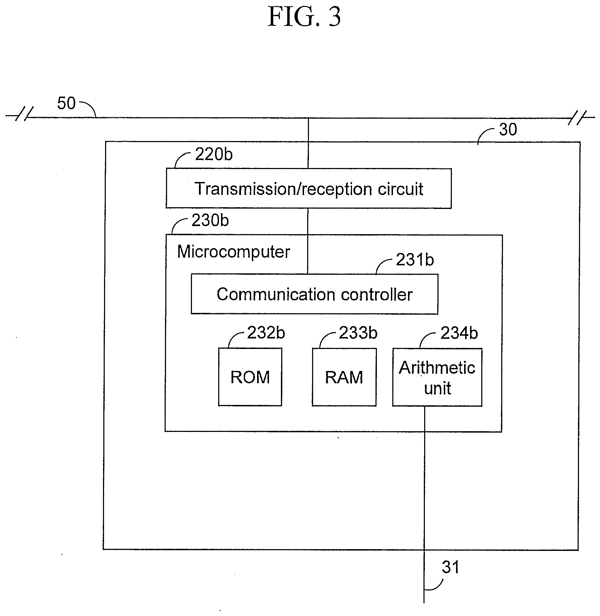

FIG. 3 is a functional block diagram of the inverter control ECU 30. The inverter control ECU 30 includes a microcomputer 230b and a transmission/reception circuit 220b. Further, the microcomputer 230b includes a ROM 232b, a RAM 233b, an arithmetic unit 234b, and a communication controller 231b. Behaviors of these functional units are substantially the same as behaviors of the respective functional units with the same names which are included in the steering control ECU 10, except that the control target is the inverter 32. The arithmetic unit 234b outputs a control command value for the inverter 32 to the control line 31.

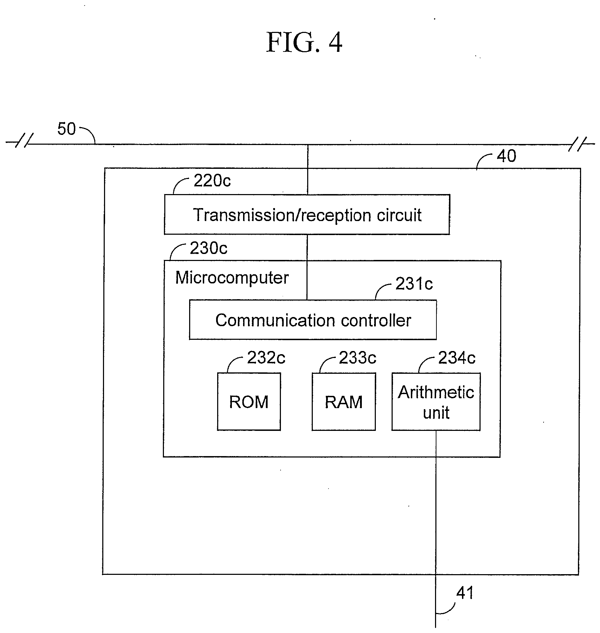

FIG. 4 is a functional block diagram of the battery control ECU 40. The battery control ECU 40 includes a microcomputer 230c and a transmission/reception circuit 220c. Further, the microcomputer 230c includes a ROM 232c, a RAM 233c, an arithmetic unit 234c, and a communication controller 231c.

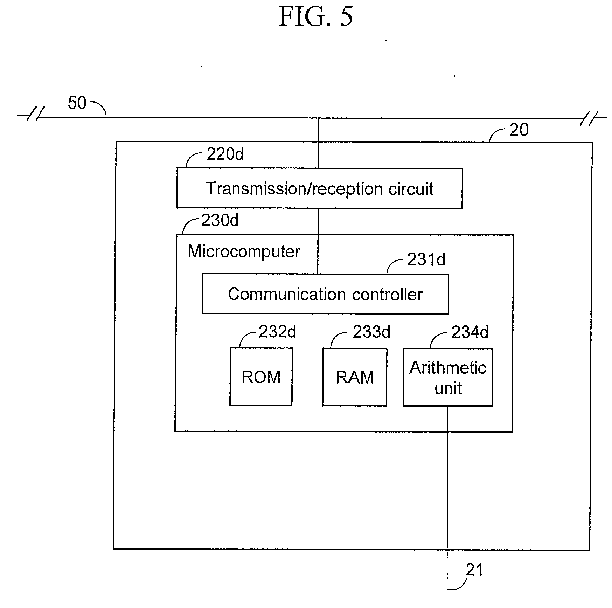

The microcomputer 230c included in battery control ECU 40 acquires a voltage value, a current value, and a temperature value of the battery 42 via the control line 41, and stores the acquired values into the RAM 233c. The arithmetic unit 234c executes a processing program stored in the ROM 232c, uses the voltage value, the current value, and the temperature value stored in the RAM 233c to thereby perform control processing, and generates state information of the battery 42 to store the generated information into the RAM 233c. The communication controller 231c transmits the state information of the battery 42 stored in the RAM 233c to another ECU via the transmission/reception circuit 220c and the in-vehicle network 50 an the basis of a protocol of time synchronous communication. FIG. 5 is a functional block diagram of the air conditioner control ECU 20. The air conditioner control ECU 20 includes a microcomputer 230d and a transmission/reception circuit 220d. Further, the microcomputer 230d includes a ROM 232d, a RAM 233d, an arithmetic unit 234d, and a communication controller 231d. Behaviors of these functional units are substantially the same as the behaviors of the respective functional units with the same names which are included in the steering control ECU 10, except that the control target is the air conditioner 22. The arithmetic unit 234d outputs a control command value for the air conditioner 22 to the control line 21.

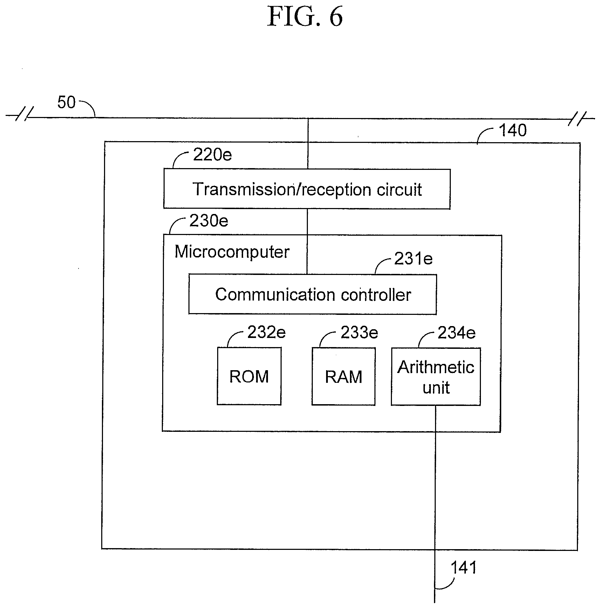

FIG. 6 is a functional block diagram of a power window control ECU 140. The power window control ECU 140 includes a microcomputer 230e and a transmission/reception circuit 220e. Further, the microcomputer 230e includes a ROM 232e, a RAM 233e, an arithmetic unit 234e, and a communication controller 231e. Behaviors of these functional units are substantially the same as the behaviors of the respective functional units with the same names which are included in the steering control ECU 10, except that the control target is the power window 142. The arithmetic unit 234e outputs a control command value for the power window 142 to the control line 141.

Hereinabove, the respective functional units included in the electric automobile 1000 have been described. Hereinafter, a behavior in which the ECUs communicate with each other via the in-vehicle network 50 is described. It should be noted that FlexRay described in FlexRay Communications System Protocol Specification, Version 2.1 Revision A, FlexRay Consortium is assumed as a communication protocol used by the respective ECUs.

The communication controllers 23 1a, 231b, 231c, 23 1d, and 231e each convert control information to be transmitted into a frame in a format compatible with the protocol, and transmit the communication frame an the basis of a predetermined communication schedule. Accordingly, if the communication controllers 231a, 231b, 231c, 231d, and 231e are temporally synchronized with each other, the communication controllers 231a, 231b, 231c, 231d, and 231e can exchange the control information without causing a collision of communication.

However, at the time at which the communication controllers start communication, the communication controllers behave in an unrelated manner, and thus are not temporally synchronized with each other. Therefore, if the communication is continued without any change, the collision occurs. In order to avoid such a collision, it is necessary to match internal time of one communication controller with internal time of another communication controller, to thereby cause the communication controllers to behave in a temporally synchronized manner.

With regard to a method of causing the communication controllers to behave in a synchronized manner, according to FlexRay, 2 to 3 pieces of the above-mentioned synchronization execution nodes are provided. The synchronization execution nodes exchange communication frames including time synchronous information, and match the starting point of a communication schedule thereof with timing of the received communication frame. This enables two ECUs to behave in a synchronized manner. After the synchronization execution nodes establish the synchronization in advance, an ECU other than the synchronization execution nodes also matches the starting point of its own communication schedule with timing of the communication frame received from the synchronization execution nodes. As a result, this enables a synchronized behavior over the entire in-vehicle network. It should be noted that the above-mentioned synchronization execution node may be referred to as a cold start node in some cases (see FlexRay Communications System Protocol Specification, Version 2.1 Revision A, FlexRay Consortium).

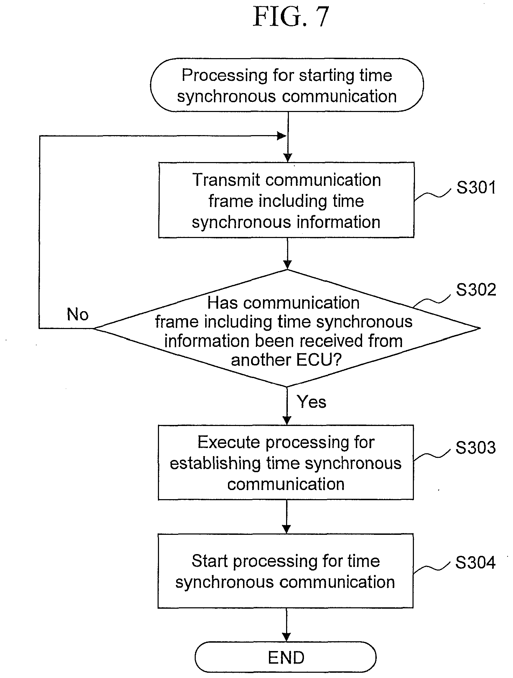

FIG. 7 is a flow chart showing processing in which the synchronization execution node establishes time synchronous communication. Hereinafter, respective steps of FIG. 7 are described.

### (FIG. 7: Step S301)

When the processing for establishing the time synchronous communication is started, the synchronization execution node transmits the communication frame including the time synchronous information.

### (FIG. 7: Step S302)

The synchronization execution node determines whether or not the communication frame including the time synchronous information has been received from another ECU. If No, the synchronization execution node returns to Step S301 and waits until the communication frame including the time synchronous information is received from the another ECU. If Yes, the synchronization execution node goes to Step S303.

### (FIG. 7: Step S303)

The synchronization execution node executes the processing for establishing the time synchronous communication. Specifically, the synchronization execution node adjusts the starting point of its own communication schedule an the basis of the time synchronous information received in Step S302, to thereby be temporally synchronized with the another ECU.

### (FIG. 7: Step S304)

The synchronization execution nodes exchange the communication frames including the time synchronous information. This enables the respective ECUs connected to the in-vehicle network 50 to perform the time synchronous communication.

It should be noted that, in the FlexRay network, the number of synchronization execution nodes is defined as 2 to 3. It is described in Note 40 on page 92 of FlexRay Communications System Protocol Specification, Version 2.1 Revision A, FlexRay Consortium that, if four or more ECUs exist on the in-vehicle network 50 as the synchronization execution nodes, there may be a case where time synchronization between the ECUs which join the communication is not established. In example 1, for ease of description, the number of synchronization execution nodes is defined as two.

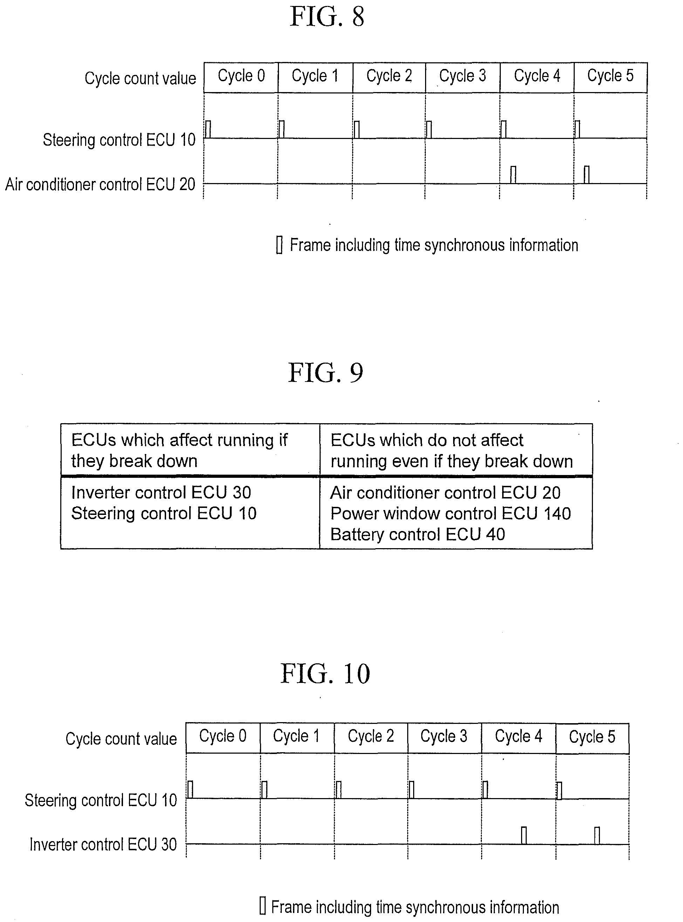

FIG. 8 illustrates transmission timing of a communication frame when the steering control ECU 10 and the air conditioner control ECU 20 execute the processing flow of FIG. 7 as the synchronization execution nodes. Hereinafter, the states of the respective ECUs in each cycle illustrated in FIG. 8 are described.

The steering control ECU 10 starts the time synchronous communication in a cycle 0, whereas the air conditioner control ECU 20 starts the time synchronous communication from a cycle 4. Therefore, the time synchronous communication on the FlexRay network cannot be established during the cycle 0 to a cycle 3.

In the cycle 4, both of the communication frame of the steering control ECU 10 and the communication frame of the air conditioner control ECU 20 are transmitted, and hence the time synchronous communication can be established. As a result, it becomes possible for the inverter control ECU 30 and the battery control ECU 40 illustrated in FIG. 1 to join the FlexRay network, and the time synchronous communication within the electric automobile 1000 is established.

Here, it is assumed in FIG. 8 that the air conditioner control ECU 20 breaks down and accordingly the processing for establishing the synchronization cannot be executed. In the present example, because the number of synchronization execution nodes is defined as two, if the air conditioner control ECU 20 breaks down, execution of the processing for establishing the time synchronization between the two ECUs becomes impossible. As a result, the respective ECUs cannot be temporally synchronized, so that the communication via the in-vehicle network 50 becomes impossible.

Meanwhile, other ECUs necessary for the running of the electric automobile 1000 are behaving, and hence the electric automobile 1000 continues to run in the state where the respective ECUs cannot communicate with the other ECUs.

At this time, focusing attention on, for example, the steering control ECU 10, the steering control ECU 10 cannot receive the vehicle speed information from another ECU, and thus cannot perform steering control suited to the vehicle speed. Specifically, only a fixed steering assist is possible instead of a driver assist suited to the vehicle speed, that is, when the vehicle speed is low, the steering is made lighter by the electric power-assisted motor 15, and when the vehicle speed is high, the steering is made heavier for security reasons.

That is, because the air conditioner control ECU 20 which is supposed not to affect running control on the electric automobile 1000 originally is selected as the synchronization execution node, the electric automobile 1000 is brought into an unsafe running condition if the air conditioner control ECU 20 breaks down.

In consideration of the above-mentioned example, it is concluded that the ECU which does not affect the running control on the electric automobile 1000 should not be caused to behave as the synchronization execution node.

In contrast to this, in the case where the inverter control ECU 30 is caused to behave as the synchronization execution node, if the inverter control ECU 30 breaks down, the communication via the in-vehicle network 50 becomes impossible, but driving of the motor 35 also becomes impossible at the same time, and hence the electric automobile 1000 stops running. Accordingly, the electric automobile 1000 is at least prevented from keeping running in an unsafe state, and hence it can be said that such a behavior that errs more on the side of caution is possible.

FIG. 9 is a diagram illustrating a result obtained by classifying the respective ECUs according to example 1. As described by using the example of FIG. 8, it is desirable that which ECU should be caused to behave as the synchronization execution node be determined on the basis of whether or not a given ECU affects the running control on the electric automobile 1000 if the given ECU breaks down. In view of this, in example 1, the respective ECUs are classified into "ECUs which affect the running if they break down" and "ECUs which do not affect the running even if they break down", and the synchronization execution nodes are selected from among the former ECUs. More specifically, an ECU which performs electronic control on the running or power of the electric automobile 1000 is classified into the "ECUs which affect the running if they break down". The inverter control ECU 30 is an ECU which drives and controls the motor 35 which provides the power of the electric automobile 1000, and thus is classified thereinto. The steering control ECU 10 is an ECU which performs control on the running direction of the electric automobile 1000, and thus is classified thereinto similarly.

FIG. 10 illustrates transmission timing of a communication frame when the steering control ECU 10 and the inverter control ECU 30 execute the processing flow of FIG. 7 as the synchronization execution nodes. Hereinafter, the states of the respective ECUs in each cycle illustrated in FIG. 10 are described.

The steering control ECU 10 starts processing for starting the time synchronous communication from a cycle 0. The inverter control ECU 30 starts processing for starting the time synchronous communication from a cycle 4. Accordingly, unless both of the two ECUs break down, the time synchronous communication is established in the cycle 4, and hence the electric automobile 1000 can run in a safe state. On the other hand, if any one of the ECUs breaks down, the time synchronous communication is not established, and the communication via the in-vehicle network 50 stops, but the running of the electric automobile 1000 also becomes impossible at the same time. In this case, because the electric automobile 1000 cannot run, even if the communication via the in-vehicle network 50 stops, it is considered that there is not any noticeable problem.

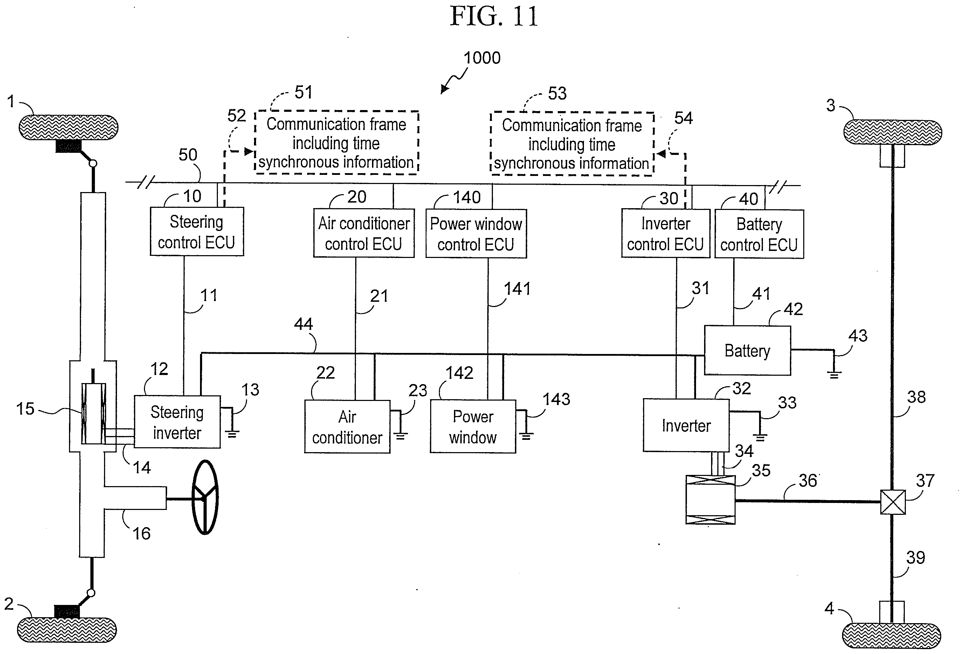

FIG. 11 is a diagram illustrating a state where the steering control ECU 10 and the inverter control ECU 30 establish time synchronous communication when these ECUs are caused to behave as the synchronization execution nodes.

The steering control ECU 10 transmits a communication frame 51 including time synchronous information as indicated by an arrow 52. Similarly, the inverter control ECU 30 transmits a communication frame 53 including time synchronous information as indicated by an arrow 54. As a result, it becomes possible for the two ECUs to mutually receive the communication frame including the time synchronous information and match the starting points of their communication schedules with each other, so that the communication can be synchronized between the two ECUs. The air conditioner control ECU 20, the power window control ECU 140, and the battery control ECU 40 can join the FlexRay network after the steering control ECU 10 and the inverter control ECU 30 establish the communication synchronization. Through the above-mentioned behavior, the respective ECUs included in the electric automobile 1000 can exchange the control information via the in-vehicle network 50.

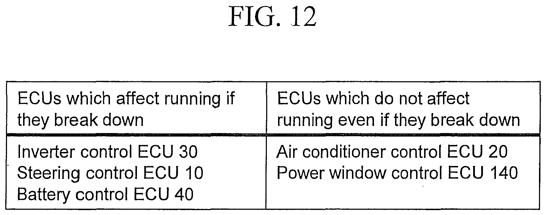

It should be noted that, in FIG. 9, the battery control ECU 40 is classified into the "ECUs which do not affect the running even if they break down". This classification is based on the assumption that the battery 42 itself keeps behaving even if the battery control ECU 40 breaks down. Meanwhile, in terms of design, there is also a case where the battery 42 is configured to stop behaving when the battery control ECU 40 breaks down. At this time, if the battery control ECU 40 breaks down, there is not a power source any more, and hence the electric automobile 1000 stops running. Accordingly, in this case, the battery control ECU 40 is classified into the "ECUs which affect the running if they break down". FIG. 12 illustrates the classification of the respective ECUs in such a case.

### <Example 2 useful for understanding the present invention>

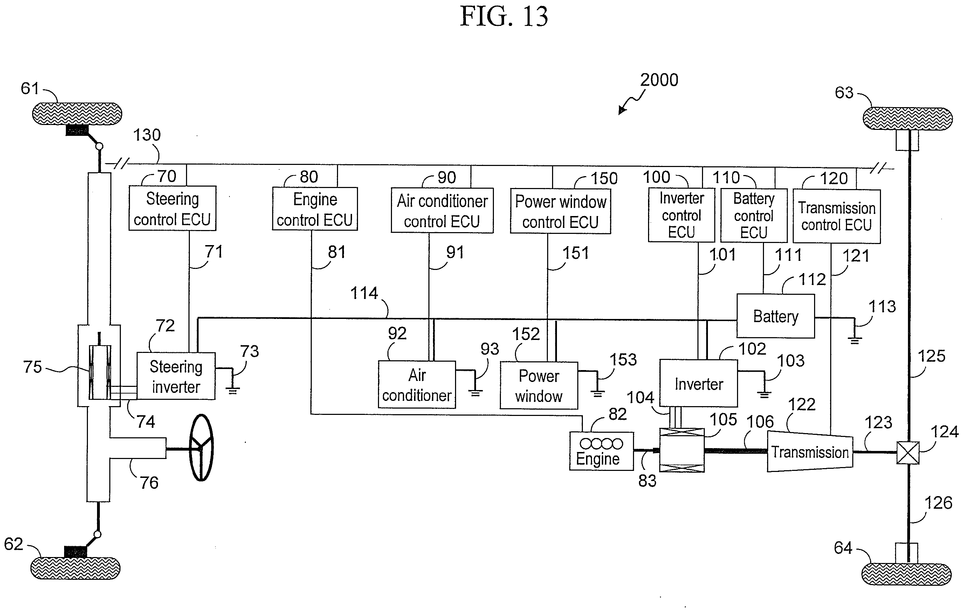

FIG. 13 is a configuration diagram of a hybrid automobile 2000 according to example 2 useful for understanding the present invention. The hybrid automobile 2000 includes front wheels 61 and 62, rear wheels 63 and 64, a steering device 76, an electric power-assisted motor 75, a steering inverter 72, a battery 112, an inverter 102, a motor 105, a propeller shaft 123, a rear differential 124, drive shafts 125 and 126, an air conditioner 92, a power window 152, an engine 82, an engine output shaft 83, a motor output shaft 106, and a transmission 122.

The battery 112 includes a plurality of series-connected cells, and supplies a direct-current voltage to the steering inverter 72, the inverter 102, the air conditioner 92, and the power window 152 via a power supply line 114. A ground line 113 of the battery 112 is connected to the body of the hybrid automobile 2000. A battery control ECU 110 is connected to the battery 112 via a control line 111, and controls the state of the battery 112.

A steering control ECU 70 transmits a control command to the steering inverter 72 via a control line 71. The steering inverter 72 converts the direct-current voltage from the battery 112 into an alternating-current voltage on the basis of the control command from the steering control ECU 70, and supplies the alternating-current voltage to the electric power-assisted motor 75 via a PWM line 74. The electric power-assisted motor 75 is built in the steering device 76. The steering device 76 is coupled to the front wheels 61 and 62. A ground line 73 of the steering inverter 72 is connected to the body of the hybrid automobile 2000.

An inverter control ECU 100 transmits a control command to the inverter 102 via a control line 101. The inverter 102 converts the direct current from the battery 112 into an alternating current on the basis of the control command from the inverter control ECU 100, and supplies the alternating current to the motor 105 via a PWM line 104. The motor 105 drives the motor output shaft 106 by means of the alternating current supplied from the inverter 102. A ground line 103 of the inverter 102 is connected to the body of the hybrid automobile 2000.

An engine control ECU 80 transmits a control command to the engine 82 via a control line 81. The engine 82 is an internal combustion engine which uses gasoline or diesel oil as its fuel, and outputs a driving force via the engine output shaft 83. The engine output shaft 83 is coupled to the motor output shaft 106, and transmits the driving force to the motor output shaft 106.

The motor 105 gives an auxiliary driving force to the motor output shaft 106 in order to assist the driving force outputted by the engine 82. The motor output shaft 106 outputs a driving force obtained by combining the driving force of the engine 82 and the auxiliary driving force of the motor 105 with each other.

The motor output shaft 106 is coupled to the transmission 122, whereby the driving force outputted by the motor output shaft 106 is transmitted to the transmission 122.

The transmission 122 is coupled to the propeller shaft 123. A driving force generated by the transmission 122 is transmitted to the rear differential 124 via the propeller shaft 123, and is further transmitted from the rear differential 124 to the rear wheels 63 and 64 via the drive shafts 125 and 126. The transmission 122 receives a control command from a transmission control ECU 120 via a control line 121, and behaves on the basis of the control command.

In order to enable maintaining a state where the hybrid automobile 2000 can run even if the transmission control ECU 120 breaks down, the transmission 122 is configured to fixedly select a predetermined given transmission gear ratio. Accordingly, the hybrid automobile 2000 can keep running even if the transmission control ECU 120 breaks down.

The air conditioner 92 receives a control command from an air conditioner control ECU 90 via a control line 91, and behaves on the basis of the control command. A ground line 93 of the air conditioner 92 is connected to the body of the hybrid automobile 2000.

The power window 152 receives a control command from a power window control ECU 150 via a control line 151, and behaves on the basis of the control command. A ground line 153 of the power window 152 is connected to the body of the hybrid automobile 2000.

An in-vehicle network 130 is connected to the steering control ECU 70, the inverter control ECU 100, the battery control ECU 110, the air conditioner control ECU 90, the engine control ECU 80, the transmission control ECU 120, and the power window control ECU 150. When the battery control ECU 110 detects a voltage drop of the battery 92, the battery control ECU 110 can notify the inverter control ECU 100 and the air conditioner control ECU 90 to that effect via the in-vehicle network 130. When the inverter control ECU 100 receives the notification, the inverter control ECU 100 causes the inverter 102 to behave in a low power consumption mode. In the same manner, the air conditioner control ECU 90 can bring the air conditioner 92 into a low power consumption mode. In the case where the battery control ECU 110 breaks down, detection of a voltage drop merely becomes impossible, and the battery voltage itself can keep being supplied to the inverter 102.

When the steering control ECU 70 receives vehicle speed information from the inverter control ECU 100 via the in-vehicle network 130, the steering control ECU 70 gives to a driver a reaction force of steering according to the vehicle speed. This makes it possible to provide safe and driver-friendly handing.

The hybrid automobile 2000 is a hybrid automobile which runs by means of the driving force outputted by the engine 82 and the auxiliary driving force outputted by the motor 105. Accordingly, the hybrid automobile 2000 can run by means of the auxiliary driving force outputted by the motor 105 even without being driven by the engine 82, and similarly, can run by means of the driving force outputted by the engine 82 even without being driven by the motor 105.

Hereinabove, the respective functional units included in the hybrid automobile 2000 have been described. Hereinafter, a criterion for selecting the synchronization execution nodes in example 2 is described.

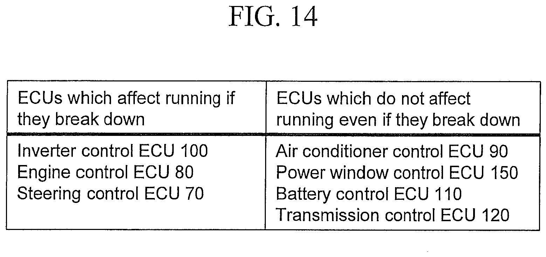

FIG. 14 is a diagram illustrating a result obtained by classifying the respective ECUs according to example 2. Also in example 2, similarly to example 1, the respective ECUs are classified into the "ECUs which affect the running if they break down" and the "ECUs which do not affect the running even if they break down". Similarly to example 1, an ECU which performs electronic control an the running or power of the hybrid automobile 2000 is classified into the "ECUs which affect the running if they break down". The synchronization execution nodes are selected from among the former ECUs.

In comparison with FIG. 9 described in example 1, the transmission control ECU 120 is newly added to the "ECUs which do not affect the running even if they break down", and the engine control ECU 80 is newly added to the "ECUs which affect the running if they break down". In this regard, even if any one of the motor 105 and the engine 82 stops, the other thereof can provide power to the hybrid automobile 2000, and hence it may seem that the inverter control ECU 100 and the engine control ECU 80 should be classified into the "ECUs which do not affect the running even if they break down". However, these two ECUs are ECUs which control the power, and thus are regarded as being classified together into the "ECUs which affect the running if they break down".

The following examples can be conceived as a criterion for selecting the synchronization execution nodes from among the "ECUs which affect the running if they break down".

The inverter control ECU 100 and the engine control ECU 80 are preferentially selected as the synchronization execution nodes, and one more synchronization execution node is selected from among the "ECUs which affect the running if they break down". As a result, three ECUs are selected as the synchronization execution nodes. In this case, even if any one of the inverter control ECU 100 and the engine control ECU 80 breaks down, if the other ECU behaves normally, the hybrid automobile 2000 can continue to run. In addition, if two synchronization execution nodes remain behaving, the communication via the in-vehicle network 130 can be continued, and hence the hybrid automobile 2000 is not brought into an unsafe state.

Hereinafter, description is given of what kind of influence is exerted on the behavior of the hybrid automobile 2000 depending on which ECUs are selected as the synchronization execution nodes.

### (Selection Example 1)

It is assumed that two or more ECUs of the air conditioner control ECU 90, the power window control ECU 150, the battery control ECU 110, and the transmission control ECU 120 are selected as the synchronization execution nodes. If these ECUs break down, although the hybrid automobile 2000 can continue to run, the communication via the in-vehicle network 130 becomes impossible. Therefore, as described above, there occurs such a trouble that the steering control ECU 70 cannot receive the vehicle speed information any more, and hence this example is not preferable.

### (Selection Example 2)

The inverter control ECU 100 and the engine control ECU 80 are selected as the synchronization execution nodes, and then one more synchronization execution node is arbitrarily selected. In this case, even if any one of the synchronization execution nodes breaks down, the synchronization is established between the remaining two synchronization execution nodes, and hence the communication can be continued. In addition, even if any one of the inverter control ECU 100 and the engine control ECU 80 breaks down, as long as the other ECU keeps behaving, the power can be provided, and hence the hybrid automobile 2000 can continue to run.

### (Selection Example 3)

It is assumed that the inverter control ECU 100, the engine control ECU 80, and the steering control ECU 70 are selected as the synchronization execution nodes. In this case, even if the inverter control ECU 100 breaks down, time synchronization can be established between the engine control ECU 80 and the steering control ECU 70, and hence the communication via the in-vehicle network 130 can be continued. In addition, the hybrid automobile 2000 itself can continue to run by means of the power of the engine 82. The same holds true for the case where the engine control ECU 80 breaks down. On the other hand, if both of the inverter control ECU 100 and the engine control ECU 80 break down, the communication via the in-vehicle network 130 becomes impossible, but the hybrid automobile 2000 itself cannot continue to run any more, and hence there is not any noticeable problem.

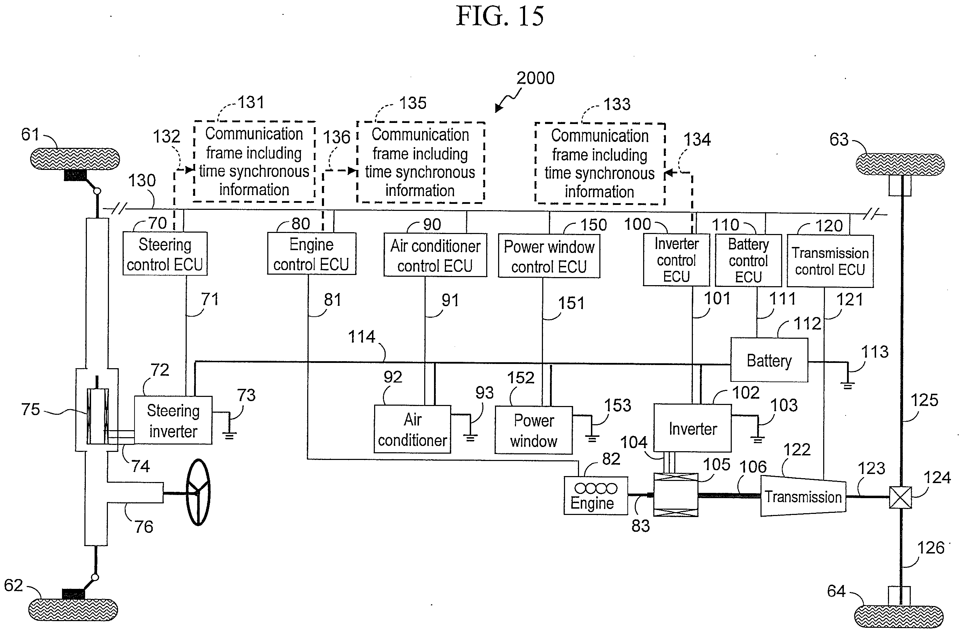

FIG. 15 is a diagram illustrating a state where the steering control ECU 70, the inverter control ECU 100, and the engine control ECU 80 establish time synchronous communication when these ECUs are caused to behave as the synchronization execution nodes.

The steering control ECU 70 transmits a communication frame 131 including time synchronous information as indicated by an arrow 132. The engine control ECU 80 transmits a communication frame 135 including time synchronous information as indicated by an arrow 136. The inverter control ECU 100 transmits a communication frame 133 including time synchronous information as indicated by an arrow 134.

In this way, the three ECUs mutually receive the communication frame including the time synchronous information, and match the starting points of their communication schedules with one another, so that the communication can be synchronized among the three ECUs. In addition, the air conditioner control ECU 90, the power window control ECU 150, the battery control ECU 110, and the transmission control ECU 120 can join the FlexRay network after the three ECUs establish the communication synchronization.

Through the above-mentioned behavior, the respective ECUs included in the hybrid automobile 2000 can exchange the control information via the in-vehicle network 130.

### <Example 3 useful for understanding the present invention>

In examples 1 and 2, description has been given of a method of selecting the synchronization execution nodes in the in-vehicle network included in the electric automobile 1000 and the hybrid automobile 2000. Such a method can be applied to other automobiles.

For example, an automobile which uses a fuel as a power source thereof and runs by engine drive is assumed. This automobile includes an engine, an engine control ECU, a transmission, a transmission control ECU, and other ECUs for air conditioner control and the like.

Also in example 3, similarly to examples 1 and 2, the respective ECUs are classified into the "ECUs which affect the running if they break down" and the "ECUs which do not affect the running even if they break down". Specifically, an ECU which performs control on the running or power of this automobile is to be classified into the "ECUs which affect the running if they break down". The engine control ECU is an ECU which performs the control on the power of this automobile, and thus corresponds to the "ECUs which affect the running if they break down".

Also in example 3, the synchronization execution nodes are selected from among the "ECUs which affect the running if they break down". In the case of the FlexRay network, 2 to 3 synchronization execution nodes are required. For example, the transmission control ECU is classified into the "ECUs which affect the running if they break down", whereby the transmission control ECU can be selected as the synchronization execution node.

### <Example 4 useful for understanding the present invention>

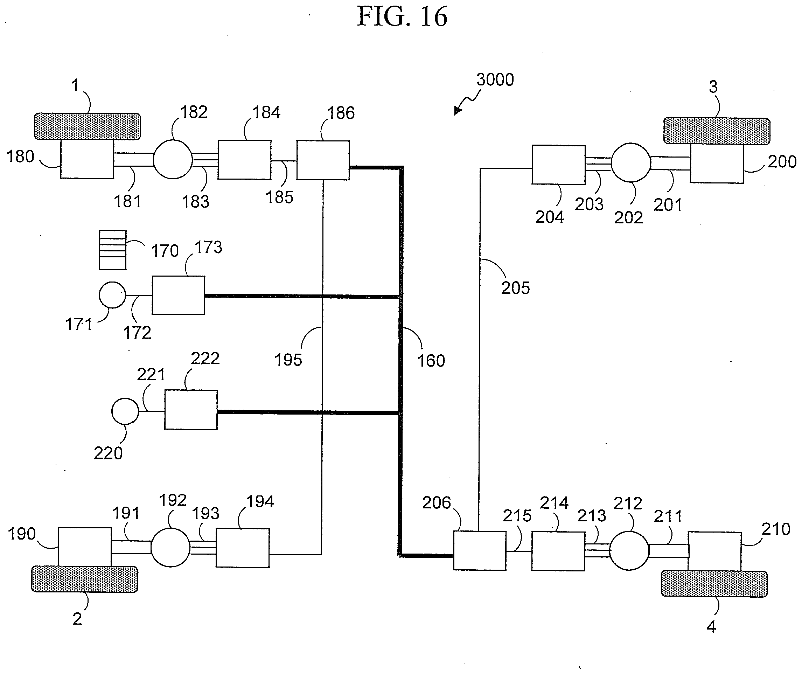

FIG. 16 is a configuration diagram of an automobile 3000 and a brake network system thereof according to example 4 of the present invention. The automobile 3000 includes: front wheels 1 and 2; rear wheels 3 and 4; a brake pedal 170; electric motors 182, 192, 202, and 212; and brake units 181, 191, 201, and 211 for stopping the rotations of brake discs 180, 190, 200, and 210 by means of the electric motors, respectively.

A brake control ECU 186 for the front wheels is connected to inverters 184 and 194 via signal lines 185 and 195, respectively. The inverters 184 and 194 are connected to the electric motors 182 and 192 via PWM signal lines 183 and 193, respectively. A brake control ECU 206 for the rear wheels is connected to inverters 204 and 214 via signal lines 205 and 215, respectively. The inverters 204 and 214 are connected to the electric motors 202 and 212 via PWM signal lines 203 and 213, respectively.

A brake sensor 171 can notify a brake pedal control ECU 173 via a signal line 172, of a depressed amount of the brake pedal 170 by a driver. A brake behavior indicator 220 receives a lighting instruction from a panel display control ECU 222 via a signal line 221, and lights up in response to the lighting instruction.

The brake control ECU 186 for the front wheels, the brake control ECU 206 for the rear wheels, the brake pedal control ECU 173, and the panel display control ECU 222 are connected to a time synchronization type brake sub-network 160.

Hereinabove, the configuration of the automobile 3000 and the brake network system has been described. Next, the behavior of the brake network system is described.

When the driver depresses the brake pedal 170, the brake sensor 171 senses this depressing operation, and the brake pedal control ECU 173 is notified of the depressed amount via the signal line 172. The brake pedal control ECU 173 generates a brake control command on the basis of the depressed amount and the like, and notifies the brake control ECU 186 for the front wheels and the brake control ECU 206 for the rear wheels, of the brake control command via the brake sub-network 160.

The brake control ECU 186 for the front wheels and the brake control ECU 206 for the rear wheels which have received the brake control command notify the inverters 184, 194, 204, and 214 of the brake control amount via the signal lines 185, 195, 205, and 215, respectively, to thereby cause the electric motors 182, 192, 202, and 212 to behave via the PWM signal lines 183, 193, 203, and 213.

The electric motors put a brake on the rotations of the brake discs 180, 190, 200, and 210 included in the brake units 181, 191, 201, and 211, respectively. This enables the automobile 3000 to stop.

The panel display control ECU 222 causes the brake behavior indicator 220 to light up via the signal line 221, and displays an indication to the effect that the brake is working. This can notify the driver of the brake behavior.

Also in example 4, the respective ECUs are classified into the "ECUs which affect the running if they break down" and the "ECUs which do not affect the running even if they break down". The brake pedal control ECU 173, the brake control ECU 186 for the front wheels, and the brake control ECU 206 for the rear wheels are ECUs which control the running of the automobile 3000. If these ECUs break down, the brake does not work, and hence these ECUs are classified into the "ECUs which affect the running if they break down". On the other hand, even if the panel display control ECU 222 breaks down, the brake behavior merely cannot be displayed, and the running is not affected, so that this ECU is classified into the "ECUs which do not affect the running even if they break down". The synchronization execution nodes are selected from among the "ECUs which affect the running if they break down". Here, the synchronization execution nodes are selected from among the brake pedal control ECU 173, the brake control ECU 186 for the front wheels, and the brake control ECU 206 for the rear wheels.

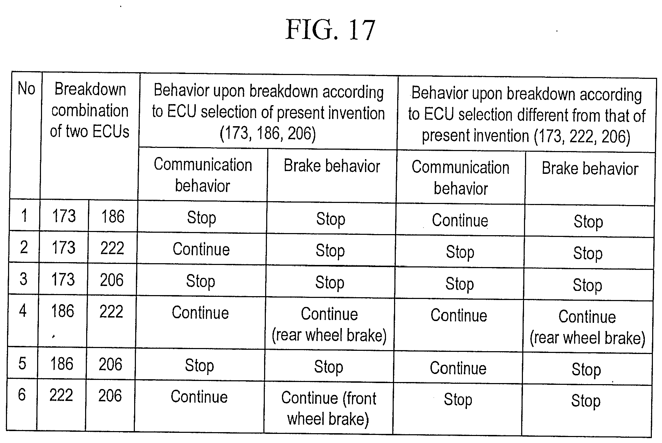

For comparison with example 4, FIG. 17 is a table in which all combinations are listed with regard to behaviors when any two of three synchronization execution nodes break down. Here, comparison is made between: the behavior (Example 4) when { the brake pedal control ECU 173, the brake control ECU 186 for the front wheels, and the brake control ECU 206 for the rear wheels} are selected as the synchronization execution nodes; and the behavior when { the brake pedal control ECU 173, the brake control ECU 206 for the rear wheels, and the panel display control ECU 222} are selected thereas. As illustrated in FIG. 17, the number of combination patterns in which two of the three synchronization execution nodes break down is six.

### (FIG. 17: Combination No. 1)

The pattern of No. 1 shows a case where the brake pedal control ECU 173 and the brake control ECU 186 for the front wheels break down. In this case, two of the synchronization execution nodes {173, 186, and 206} in example 4 break down, and establishment of time synchronization becomes impossible, so that the communication via the in-vehicle network stops. In addition, because the brake pedal control ECU 173 breaks down, transmission of the brake control command becomes impossible, so that the brake behavior also stops. On the other hand, in the case where {173, 222, and 206} are selected as the synchronization execution nodes, because only one synchronization execution node breaks down, the communication via the in-vehicle network continues. However, because the brake pedal control ECU 173 breaks down, the brake behavior stops.

### (FIG. 17: Combination No. 2)

The pattern of No. 2 shows a case where the brake pedal control ECU 173 and the panel display control ECU 222 break down. In this case, only one of the synchronization execution nodes {173, 186, and 206} in example 4 breaks down, so that the communication via the in-vehicle network continues. However, because the brake pedal control ECU 173 breaks down, the brake behavior stops. On the other hand, in the case where {173, 222, and 206} are selected as the synchronization execution nodes, because two synchronization execution nodes break down, establishment of time synchronization becomes impossible, and the communication via the in-vehicle network stops. In addition, because the brake pedal control ECU 173 breaks down, the brake behavior also stops.

### (FIG. 17: Combination No. 3)

The pattern of No. 3 shows a case where the brake pedal control ECU 173 and the brake control ECU 206 for the rear wheels break down. In this case, two of the synchronization execution nodes {173, 186, and 206} in example 4 break down, and establishment of time synchronization becomes impossible, so that the communication via the in-vehicle network stops. In addition, because the brake pedal control ECU 173 breaks down, transmission of the brake control command becomes impossible, so that the brake behavior also stops. On the other hand, in the case where {173, 222, and 206} are selected as the synchronization execution nodes, because two synchronization execution nodes break down, establishment of time synchronization becomes impossible, so that the communication via the in-vehicle network stops. In addition, because the brake pedal control ECU 173 breaks down, the brake behavior also stops.

### (FIG. 17: Combination No. 4)

The pattern of No. 4 shows a case where the brake control ECU 186 for the front wheels and the panel display control ECU 222 break down. In this case, only one of the synchronization execution nodes { 173, 186, and 206} in example 4 breaks down, so that the communication via the in-vehicle network continues. In addition, because the brake pedal control ECU 173 can notify the brake control ECU 206 for the rear wheels of the brake control command via the brake network, the automobile 3000 can stop by means of the brake of the rear wheels. On the other hand, in the case where {173, 222, and 206} are selected as the synchronization execution nodes, because only one synchronization execution node breaks down, the communication via the in-vehicle network continues. In addition, because the brake control ECU 206 for the rear wheels can be controlled, the automobile 3000 can stop by means of the brake of the rear wheels.

### (FIG. 17: Combination No. 5)

The pattern of No. 5 shows a case where the brake control ECU 186 for the front wheels and the brake control ECU 206 for the rear wheels break down. In this case, two of the synchronization execution nodes {173, 186, and 206} in example 4 break down, and establishment of time synchronization becomes impossible, so that the communication via the in-vehicle network stops. In addition, because all of the brake control ECUs break down, the brake behavior also stops. On the other hand, in the case where {173, 222, and 206} are selected as the synchronization execution nodes, because only one synchronization execution node breaks down, the communication via the in-vehicle network continues. However, because all of the brake control ECUs break down, the brake behavior stops.

### (FIG. 17: Combination No. 6)

The pattern of No. 6 shows a case where the brake control ECU 206 for the rear wheels and the panel display control ECU 222 break down. In this case, only one of the synchronization execution nodes {173, 186, and 206} in example 4 breaks down, so that the communication via the in-vehicle network continues. In addition, because the brake pedal control ECU 173 can notify the brake control ECU 186 for the front wheels of the brake control command via the brake network, the automobile 3000 can stop by means of the brake of the front wheels. On the other hand, in the case where {173, 222, and 206} are selected as the synchronization execution nodes, because two synchronization execution nodes break down, establishment of time synchronization becomes impossible, so that the communication via the in-vehicle network stops. In addition, because the brake pedal control ECU 173 cannot notify the brake control ECU of the brake command via the in-vehicle network, the brake behavior also stops.

### (FIG. 17: Conclusion)

According to the above-mentioned example, in the pattern of Combination No. 6, the configuration of the synchronization execution nodes according to example 4 is superior from the point of view of the brake behavior, and hence the automobile 3000 can run more safely.

### <Example 5 useful for understanding the present invention>

In example 4, the brake network system which is mounted on the automobile is taken as an example, but a method similar to that of the present invention can also be applied to another in-vehicle network system. For example, the similar method can also be applied to a steering network system in which steering control is performed while a plurality of ECUs communicate with one another in a temporally synchronized manner. In addition, the in-vehicle network as described in examples 1 to 3 which covers the entire vehicle can be regarded as one example of the in-vehicle network system according to the present invention.

### <Example 6 useful for understanding the present invention>

In examples 1 to 5, description has been given of the method of selecting the synchronization execution nodes in the vehicle and the in-vehicle network mounted on the vehicle. A similar method can also be applied to a network system for another electronic device in which two or more electronic control units communicate with each other in a temporally synchronized manner.

It is desirable that which electronic control unit should be selected as the synchronization execution node be determined an the basis of whether or not the electronic device cannot behave any more if the selected electronic control unit breaks down. When the electronic control unit which disables the behavior of the electronic device if it breaks down is selected as the synchronization execution node, even if this electronic control unit breaks down and establishment of time synchronization therefore becomes impossible, the electronic device itself stops, and hence there is not any noticeable problem. That is, effects similar to those of examples 1 to 5 can be obtained.

In addition, in examples 1 to 5, FlexRay is assumed as the communication protocol, but a method similar to that of the present invention can also be applied to another network using a communication protocol in which two or more communication nodes establish time synchronization.

In addition, in examples 1 to 5, a function of each ECU may be realized by combining functions of two or more ECUs. For example, a given ECU may transmit a control command to the inverter control ECU, and the combination of these two ECUs may control the inverter.

### DESCRIPTION OF SYMBOLS

1, 2: front wheel, 3, 4: rear wheel, 10: steering control ECU, 11: control line, 12: steering inverter, 13: ground line, 14: PWM line, 15: electric power-assisted motor, 16: steering device, 20: air conditioner control ECU, 21: control line, 22: air conditioner, 23: ground line, 30: inverter control ECU, 31: control line, 32: inverter, 33: ground line, 34: PWM line, 35: motor, 36: propeller shaft, 37: rear differential, 38, 39: drive shaft, 40: battery control ECU, 41: control line, 42: battery, 43: ground line, 44: power supply line, 50: in-vehicle network, 51: frame including time synchronous information, 53: frame including time synchronous information, 220a to 220e: transmission/reception circuit, 230a to 230e: microcomputer, 231a to 231e: communication controller, 232a to 232e: ROM, 233a to 233e: RAM, 234a to 234e: arithmetic unit, 61, 62: front wheel, 63, 64: rear wheel, 70: steering control ECU, 71: control line, 72: steering inverter, 73: ground line, 74: PWM line, 75: electric power-assisted motor, 76: steering device, 80: engine control ECU, 81: control line, 82: engine, 83: engine output shaft, 90: air conditioner control ECU, 91: control line, 92: air conditioner, 93: ground line, 100: inverter control ECU, 101: control line, 102: inverter, 103: ground line, 104: PWM line, 105: motor, 106: motor output shaft, 110: battery control ECU, 111: control line, 112: battery, 113: ground line, 114: power supply line, 120: transmission control ECU, 121: control line, 122: transmission, 123: propeller shaft, 124: rear differential, 125, 126: drive shaft, 130: in-vehicle network, 131: frame including time synchronous information, 133: frame including time synchronous information, 135: frame including time synchronous information, 140: power window control ECU, 141: control line, 142: power window, 143: ground line, 150: power window control ECU, 151: control line, 152: power window, 153: ground line, 160: brake sub-network, 170: brake pedal, 171: brake sensor, 172: signal line, 173: brake pedal control ECU, 180: brake disc, 181: brake unit, 182: electric motor, 183: PWM signal line, 184: inverter, 185: signal line, 186: brake control ECU for front wheels, 190: brake disc, 191: brake unit, 192: electric motor, 193: PWM signal line, 194: inverter, 195: signal line, 200: brake disc, 201: brake unit, 202: electric motor, 203: PWM signal line, 204: inverter, 205: signal line, 206: brake control ECU for rear wheels, 210: brake disc, 211: brake unit, 212: electric motor, 213: PWM signal line, 214: inverter, 215: signal line, 220: brake behavior indicator, 221: signal line, 222: panel display control ECU.

## Claims

1. An electronic control network system for an electric vehicle (1000), comprising:
a plurality of electronic control units (10, 20, 30, 40, 140) which control a behavior of electronic devices; and
a network (50) which connects the electronic control units (10, 20, 30, 40, 140) to each other, wherein:
any two or more of the electronic control units (10, 30) are configured as synchronization execution nodes which exchange communication frames including time synchronous information to thereby establish time synchronous communication, and the remaining electronic control (20, 40, 140) units are configured to perform time synchronous communication in accordance with the established time synchronous communication; and
wherein the electronic control units are classified in two groups, of which the first group comprises electronic control units (10, 30), which affect running of the electric vehicle (1000), in case one or more break down, and of which the second group comprises electronic control units (20, 40, 140), which do not affect running of the electric vehicle (1000), in case one or more break down; and
the synchronization execution nodes are selected from the electronic control units (10, 30) of the first group, wherein at least one electronic control unit (10, 30) of the first group performs electronic control on power of the electric vehicle (1000), which disable the behavior of the electronic device if one or more of the synchronization execution nodes break down.

## Patentansprüche

1. Elektronisches Steuerungsnetzsystem für ein Elektrofahrzeug (1000), das Folgendes umfasst:
mehrere elektronische Steuereinheiten (10, 20, 30, 40, 140), die ein Verhalten von elektronischen Vorrichtungen steuern; und
ein Netz (50), das die elektronischen Steuereinheiten (10, 20, 30, 40, 140) miteinander verbindet, wobei
zwei oder mehr beliebige elektronische Steuereinheiten (10, 30) als Synchronisationsausführungsknoten konfiguriert sind, die Kommunikationsrahmen, die zeitsynchrone Informationen enthalten, austauschen, um dadurch eine zeitsynchrone Kommunikation aufzubauen, und die verbleibenden elektronischen Steuereinheiten (20, 40, 140) konfiguriert sind, eine zeitsynchrone Kommunikation in Übereinstimmung mit der aufgebauten zeitsynchronen Kommunikation durchzuführen;
die elektronischen Steuereinheiten in zwei Gruppen eingestuft sind, deren erste Gruppe elektronische Steuereinheiten (10, 30) umfasst, die ein Betreiben des Elektrofahrzeugs (1000) beeinträchtigen, falls eine oder mehrere ausfallen, und deren zweite Gruppe elektronische Steuereinheiten (20, 40, 140) umfasst, die ein Betreiben des Elektrofahrzeugs (1000) nicht beeinträchtigen, falls eine oder mehrere ausfallen; und
die Synchronisationsausführungsknoten aus den elektronischen Steuereinheiten (10, 30) der ersten Gruppe gewählt sind, wobei mindestens eine elektronische Steuereinheit (10, 30) der ersten Gruppe eine elektronische Steuerung der Leistung des Elektrofahrzeugs (1000) durchführt, die das Verhalten der elektronischen Vorrichtung deaktivieren, wenn ein oder mehrere Synchronisationsausführungsknoten ausfallen.

## Revendications

1. Système de réseau de commande électronique pour un véhicule électrique (1000), comprenant :
une pluralité d'unités de commande électronique (10, 20, 30, 40, 140) qui commandent un comportement de dispositifs électroniques ; et
un réseau (50) qui connecte les unités de commande électronique (10, 20, 30, 40, 140) les unes aux autres, dans lequel :
deux ou plusieurs unités quelconques (10, 30) parmi les unités de commande électronique sont configurées comme nœuds d'exécution de synchronisation qui échangent des trames de communication incluant des informations synchrones dans le temps pour ainsi établir une communication synchrone dans le temps, et les unités de commande électronique (20, 40, 140) restantes sont configurées pour effectuer une communication synchrone dans le temps en accord avec la communication synchrone temporelle établie ; et
dans lequel les unités de commande électronique sont classifiées en deux groupes, le premier groupe comprenant des unités de commande électronique (10, 30) qui affectent un fonctionnement du véhicule électrique (1000) en cas de panne d'une ou de plusieurs d'entre elles, et le second groupe comprenant des unités de commande électronique (20, 40, 140) qui n'affectent pas un fonctionnement du véhicule électrique (1000) en cas de panne d'une ou de plusieurs d'entre elles ; et
les noeuds d'exécution de synchronisation sont sélectionnés parmi les unités de commande électronique (10, 30) du premier groupe, au moins une unité de commande électronique (10, 30) du premier groupe effectuant une commande électronique concernant une puissance du véhicule électrique (1000), qui désactivent le comportement du dispositif électronique si un ou plusieurs noeuds parmi les noeuds d'exécution de synchronisation tombent en panne.
